# EUROPEAN PATENT SPECIFICATION

(11) **EP 2 384 921 B1**
(45) Date of publication and mention of the grant of the patent: **19.12.2012**
(21) Application number: 10161941.9
(22) Date of filing: 05.05.2010
(51) Int. Cl.: B60K 26/02

(54) **Pedal device for a vehicle**
Pedalvorrichtung für ein Fahrzeug
Dispositif à pédales pour véhicule

(43) Date of publication of application: 09.11.2011
(73) Proprietor: Volvo Car Corporation, 405 31 Göteborg (SE)
(72) Inventor: Andersson, John-Erik, 44455, Stenungsund (SE); Kapocs, Marcel, 42942, Särö (SE)
(74) Representative: Widahl, Jenny Marie

(56) References cited:
- EP-A2- 1 792 799
- JP-A- 2004 060 484
- US-A1- 2004 195 022

## Description

### TECHNICAL FIELD

The present invention relates to a pedal device for vehicle, which vehicle is arranged to be able to operate in a cruise control mode. The pedal device enables the driver to use a pedal as a footrest when driving in the cruise control mode.

### BACKGROUND OF THE INVENTION

Driving a vehicle, such as an automobile, normally means that driver uses a foot to operate a gas pedal. The foot is then positioned on the gas pedal and can depress the gas pedal in order to accelerate the vehicle. This represents a normal mode of vehicle control. It is further known to equip vehicles with cruise control. Thereby the speed of the vehicle is controlled by a control system instead of being actively operated by the driver, when the vehicle is in a cruise control mode. The control system may for example be set to maintain a certain desired speed or to keep an appropriate minimum inter-vehicle distance to the vehicle in front.

When running in the cruise control mode, the driver does not actively use his/her foot for the operation of the gas pedal. The driver can then choose to keep his/her foot in the air above the pedal, which however may be uncomfortable and tiresome. The driver may also choose to rest his/her foot on the floor close to the brake pedal or even under the brake pedal, often with the whole foot against the floor. However, from this position it will take longer time to reach the brake pedal as compared to when the foot is on the gas pedal driving in the normal mode, which could cause an increase in braking distance.

Document JP2006182139 A discloses a generic pedal device of a vehicle, wherein the gas pedal may be used as a footrest while the vehicle is travelling at constant speed. A control circuit enables acceleration of the vehicle when the gas pedal is depressed by a force not less than a predetermined value and prohibits acceleration when the force is below the predetermined value.

### SUMMARY OF THE INVENTION

The object of the present invention is to overcome or ameliorate at least one of the disadvantages of the prior art, or to provide a useful alternative.

It is desirable to provide a pedal device giving the driver of the vehicle accuracy and control of his/her pedal operation, also when the pedal operation is initiated from the foot being in a position using the pedal as a footrest in the cruise control mode.

The object above may be achieved by the invention according to claim 1.

In a first aspect of the present invention there is provided a pedal device for a vehicle. The pedal device comprises
- a pedal adapted to be depressed by a driver by means of a force, and
- a restriction means adapted to restrict the displacement of the pedal in the depression direction.
When the vehicle is in a cruise control mode, the restriction means is adapted to retain the pedal in a rest position when the pedal is subjected to a force less than or equal to a predetermined first threshold value. The restriction means is further adapted to allow depressing of the pedal away from the rest position when the pedal is subjected to a force greater than the first threshold value. The pedal device is arranged such that, after having exceeded the first threshold value, the force required to depress the pedal reduces gradually as a function of further displacement for at least a part of the further displacement.

The vehicle has a normal mode in which the throttle is operated by a driver of the vehicle, and a cruise control mode in which the throttle is operated by the cruise control, which in turn is set by the driver e.g. by selecting a desired speed. The present invention relates to when running the vehicle in the cruise control mode and the driver taking over the operation of the pedal after having left the rest position.

After having exceeded the first threshold the force needed for further displacement of the pedal reduces gradually as a function of the displacement for at least a part of the further displacement. Reduces gradually means that a graph of force versus displacement has a smoothly sinking curve form without any sudden steps. Thereby, the driver experiences all the time that he/she has full contact with the pedal and that he/she is in control of its operation with good accuracy. If, instead, the curve would have a sudden step, the driver may experience this as a loss of function of the pedal, which may cause the driver to panic and, in a worst case scenario, may even cause an accident. Preferably, the gradient of the curve is continuous, except for at the beginning of the curve when exceeding the first threshold of the force.

In an embodiment, a graph of the force versus the displacement, i.e. the pedal characteristic curve, has a gradient having a maximum magnitude, which during the at least a part of the further displacement is between 0.5 and 4 N/mm, preferably between 1 and 2 N/mm and most preferably between 1.3 and 1.7 N/mm. Experiments have revealed that a maximum magnitude of essentially 1.5 N/mm is especially appropriate. The magnitude of the gradient may be largest directly after leaving the rest position and subsequently the magnitude of the gradient may successively reduce. The sign of the gradient is negative, since the required force as a function of displacement is gradually reduced.

Typically the first threshold value may be between 10 and 60 N, preferably between 20 and 50 N and most preferably between 30 and 40 N. Experiments have revealed that first threshold value values around 35 N are especially appropriate. Such values correspond to the weight of a foot resting on the pedal.

The first threshold value may be between 60% and 130% of the full force, preferably between 80% and 110% and most preferably between 90% and 100%. The full force corresponds to a full displacement, which is reached when the pedal is pressed to the bottom and cannot be depressed any further.

In an embodiment of the pedal device, for pedal displacements smaller than a predetermined displacement threshold, the force needed to depress the pedal further is higher when going from the rest position than going from a corresponding pedal position during the normal mode of operation of the vehicle.

In an embodiment of the pedal device, for pedal displacements larger than a predetermined displacement threshold, the force required to depress the pedal further is substantially the same going from the rest position as from a corresponding pedal position during the normal mode of operation of the vehicle. This would give the driver the same feeling no matter if the operation of the pedal started from the vehicle being in the normal mode or the rest position.

The displacement threshold may be located at a displacement being between 10% and 80% of the full displacement preferably between 20% and 70% of the full displacement, and most preferably between 30% and 60% of the full displacement.

For an exemplary embodiment comprising the displacement threshold, and having exceeded the rest first threshold value, the force required to depress the pedal is reduced gradually as a function of further displacement until a displacement is reached corresponding to a minimum force, the displacement corresponding to the minimum force being less than the displacement threshold. This means that the force versus displacement curve, i.e. the pedal characteristic curve has a minimum which is located at a displacement less than the displacement threshold. Typically the displacement corresponding to the minimum force is between 20% and 100% of the displacement threshold, preferably between 30% and 80% and most preferably between 40% and 60%.

In a preferred embodiment, the pedal device forms a gas pedal of the vehicle. Alternatively, it may form a brake pedal.

If the pedal device forms the gas pedal, the pedal device further may have a kick-down function, achievable by depressing the pedal with a force exceeding a kick-down threshold to attain kick-down, the kick-down threshold being substantially as great as the first threshold or greater than the first threshold.

In an embodiment of the pedal device according to the invention, the restriction means is comprised in a pedal housing forming part of the pedal device, the pedal being connected to the pedal housing by means of a pedal lever. It is known from prior art to locate the restriction means such that it operates against the pedal lever, but in those known cases the restriction means is located outside the pedal housing. If however, the restriction means instead is located within the pedal housing as suggested, it is easier to encapsulate the restriction means, thereby protecting it from moisture and dirt. The potential risk of the driver's foot becoming entangled in it is also reduced. It is further to be noted that the localization of the restriction means is independent of the shape of the pedal characteristic curve, and that this localization may be used for different kinds of pedal devices, including pedal devices having known pedal characteristics. However, the combination of a pedal device having a pedal characteristic curve according to the claimed invention with the localization of the restriction means in the pedal housing has been found to be especially beneficial.

The restriction means may comprise an electrical motor, the output torque of which is utilized to control the displacement of the pedal. Such an electrical motor is suitably located in the pedal housing.

The electrical motor may be arranged to provide a selectable output torque. By controlling the output torque as a function of displacement, e.g. by means of a control system, the pedal characteristic may be adapted to individual vehicles, to individual drivers and/or to driving conditions. Purely as an example, the first threshold value may be selected dependent on the weight of the driver's foot, such that a person having a large foot can use a higher first threshold value than a person with a small foot. By selecting control parameters of the electrical motor, the shape of the pedal characteristic curve may be adapted to obtain the desired curve shape.

The restriction means may comprise a degressive spring arrangement. Such a degressive spring arrangement may suitably be located in the pedal housing. A degressive spring characteristic curve is characterized by the fact that a decreasing force is needed for displacing the spring arrangement further away from equilibrium.

The spring arrangement may be pre-tensioned in order to provide the first threshold value. The size of the pre-tensional force depends on the arrangement of the levers in the pedal device, for example the length of the levers, but the pre-tensional force is adapted in order to provide the above-mentioned first threshold value to the pedal.

Further, an abutment may be arranged to provide a physical stop preventing the pedal from moving further upwards above the rest position. The abutment is arranged to take up the forces of the pre-tensioned spring arrangement. When a foot is placed on the pedal, the weight of the foot is counteracted by the pre-tensional force of the spring arrangement, such that the pre-tensional force at least partly is used to support the foot.

### BRIEF DESCRIPTION OF THE DRAWINGS

The present invention will hereinafter be further explained by means of non-limiting examples with reference to the appended figures wherein:
- Fig. 1: is a schematic view of a pedal device according to a first embodiment of the invention;
- Fig. 2: illustrates the pedal characteristics of the pedal device of Fig. 1;
- Fig. 3: illustrates the pedal characteristics of another pedal device according to a second embodiment of the invention;
- Fig. 4: illustrates the pedal characteristics of another pedal device according to a third embodiment of the invention;
- Fig. 5: is a schematic view of a pedal device according to a fourth embodiment of the invention;
- Fig. 6: illustrates the pedal characteristics of the pedal device of Fig. 5.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims. Details from two or more of the embodiments may be combined with each other.

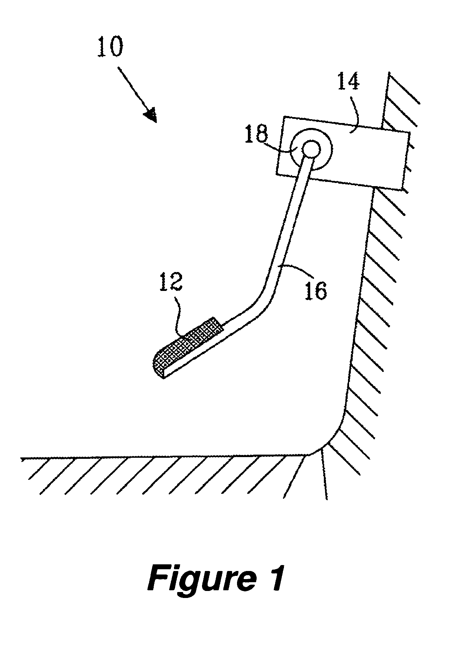

Figure 1 schematically illustrates a pedal device 10 of a vehicle according to a first embodiment of the invention. The vehicle has a normal mode, in which the throttle is operated by a driver of the vehicle, and a cruise control mode, in which the throttle is operated by the cruise control, which in turn is set by the driver e.g. by selecting a desired speed.

The pedal device 10 comprises a pedal 12, a pedal housing 14 and a pedal lever 16. The pedal 12 is adapted to be depressed by the driver of the vehicle. In the example, the pedal 12 is a gas pedal, which is depressible by the foot of the driver. The pedal lever 16 pivotally connects the pedal 12 to the pedal housing 14. The pivot point of the pedal lever 16 is located in the pedal housing 14. The pedal device 10 further comprises a restriction means which is able to restrict the displacement of the pedal 12 when the vehicle is in the cruise control mode. According to the first embodiment of the invention, the restriction means is an electrical motor 18, the output torque of which is used to control the movement of the pedal lever 16 when the vehicle is in the cruise control mode. By controlling the output torque of the electrical motor 18, the resistance force when depressing the pedal 12 may be varied. The electrical motor 18 is located in the pedal housing 14 adjacent to the pivot point of the pedal lever 16. As an alternative, the restriction means may operate anywhere along the pedal lever 16 or at the pedal 12.

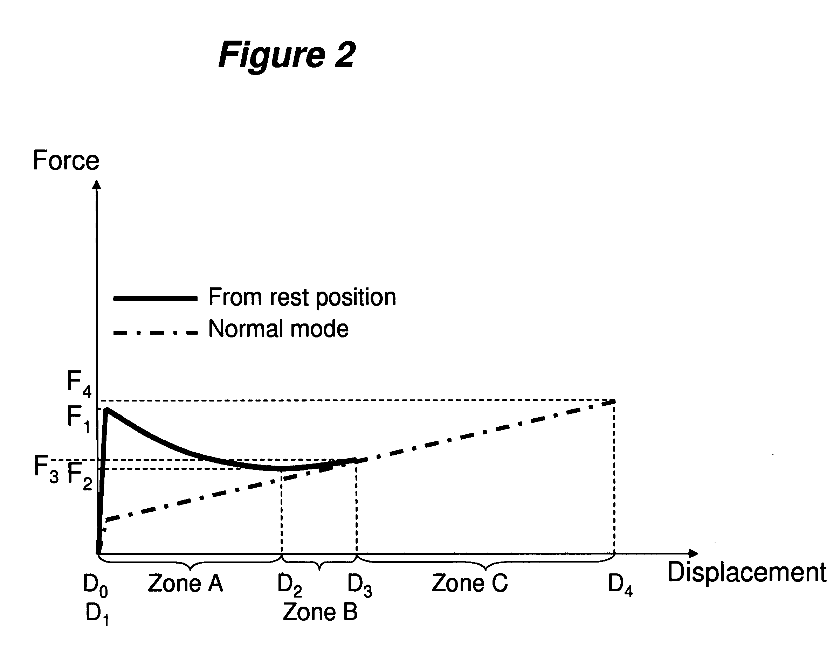

In Figure 2, the pedal characteristic of a pedal device according to the invention is illustrated as a graph of force versus displacement. The displacement may be measured in millimetres or degrees. The dashed line illustrates the pedal characteristic of the normal mode. The driver must depress the pedal 12 in order to operate the throttle. By depressing the pedal 12 harder, the engine is fed more gas. The relationship between required force and displacement may typically be essentially linear as illustrated in the Figure 2 for the normal mode.

The solid line of Figure 2 illustrates the pedal characteristic when going from the rest position for the pedal device according to the invention, e.g. the first embodiment exemplified in Figure 1. The solid line begins at a predetermined first threshold value F₁ at essentially zero displacement. When the pedal 12 is subjected to a force less than or equal to the predetermined first threshold value F₁, the restriction means retains the pedal 12 in a rest position D₀. Therefore the driver can rest his/her foot on the pedal and does not have to put the foot beside the pedal or actively hold the foot by muscle force. This is more comfortable and also safer, since the foot is on the pedal 12 and can act instantaneously without having to be moved first, if accelerating, or only being moved a short distance to the brake pedal for braking. When the pedal 12 is subjected to a force greater than the first threshold value F₁, the pedal 12 is activated and the restriction means 18 allows depressing of the pedal away from the rest position. Preferably, the first threshold value F₁ corresponds to the weight of a foot. Typically the first threshold value F₁ is between 10 and 60 N, preferably between 20 and 50 N and most preferably between 30 and 40 N. Experiments have revealed that first threshold values F₁ around 35 N are very appropriate. A first displacement denoted D₁ corresponds to the displacement, wherein the force required to depress the pedal starts reducing.

As illustrated in Figure 2, D₀ and D₁ may essentially coincide, such that the pedal directly leaves the rest position when the force exceeds the predetermined first threshold value F₁, thereby avoiding that the driver experiences a delay when depressing the gas pedal in order to leave the rest position.

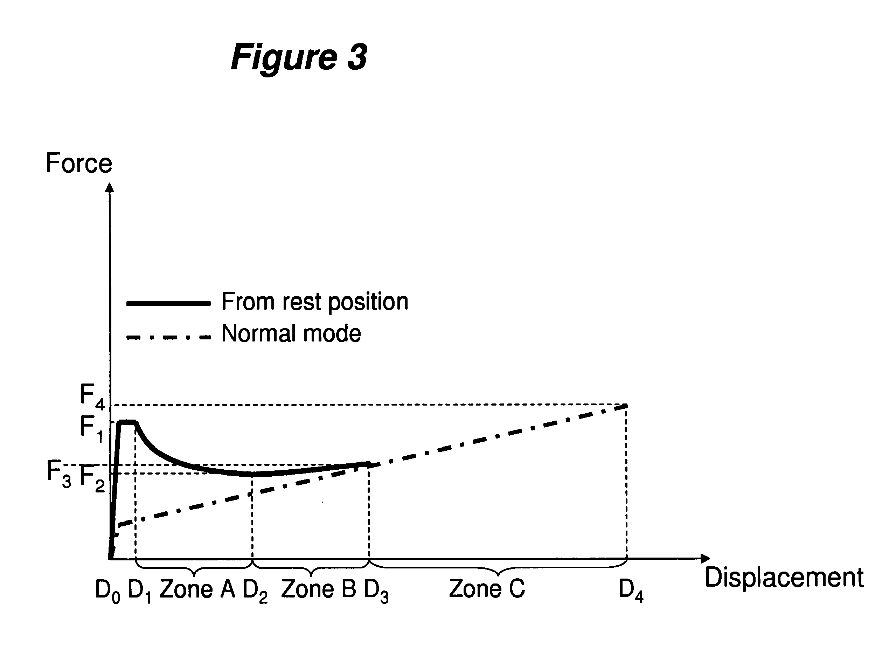

As an alternative, the solid line may have a plateau from D₀ to D₁, for example for overcoming a certain internal resistance in the pedal device, as can be seen in Figure 3.

After having exceeded the first threshold F₁, the force needed for further displacement of the pedal gradually reduces as a function of the displacement, Zone A of the diagram, until reaching a minimum force F₂ corresponding to a displacement D₂. Further, for the solid line in Zone A, the magnitude of the gradient is largest directly after the displacement D₁ and after a while the magnitude of the gradient successively decreases. The gradient is negative in zone A since the required force is gradually reduced. Thereafter, in Zone B, the force gradually increases until the solid line, being the pedal characteristics going from the rest position, coincides with the dashed line, being the pedal characteristic of the normal mode, at a force F₃ corresponding to a displacement threshold D₃. The solid line is located above the dashed line in zones A and B, i.e. a higher force is required if these zones have been reached from the rest position as compared to from a corresponding pedal position of the normal mode. As can be gleaned from the diagram, the solid line does not have any sudden steps. Thereby, the driver experiences all the time that he/she has full contact with the pedal and that he/she is in control of its operation with good accuracy. If, instead, the curve would have a sudden step, the driver may experience this as a loss of function of the pedal, which may cause the driver to panic and may, in a worst case scenario, even cause an accident. Preferably, the pedal characteristic has a smooth curve form as in Figure 2 or 3, wherein the gradient of the curve is continuous, except for when leaving the plateau at D₁.

In zone C, the dashed line and the solid line coincide, i.e. the pedal characteristic of zone C are the same no matter if zone C has been reached from the rest position or from a corresponding pedal position during the normal mode of operation of the vehicle. The required force is further increased until an end position of the pedal, denoted by a full displacement D₄ corresponding to a full force F₄. The first threshold value F₁ typically is between 60% and 130% of the full force F₄, preferably between 80% and 110% and most preferably between 90% and 100%.

The displacement threshold D₃ is located at a displacement being between 10% and 80% of the full displacement D₄, preferably between 20% and 70% of the full displacement D₄, and most preferably between 30% and 60% of the full displacement D₄.

The displacement D₂ may coincide with the displacement threshold D₃, giving a diagram without zone B, though normally D₂ is between 20% and 100% of D₃, preferably between 30% and 80% and most preferably between 40% and 60%.

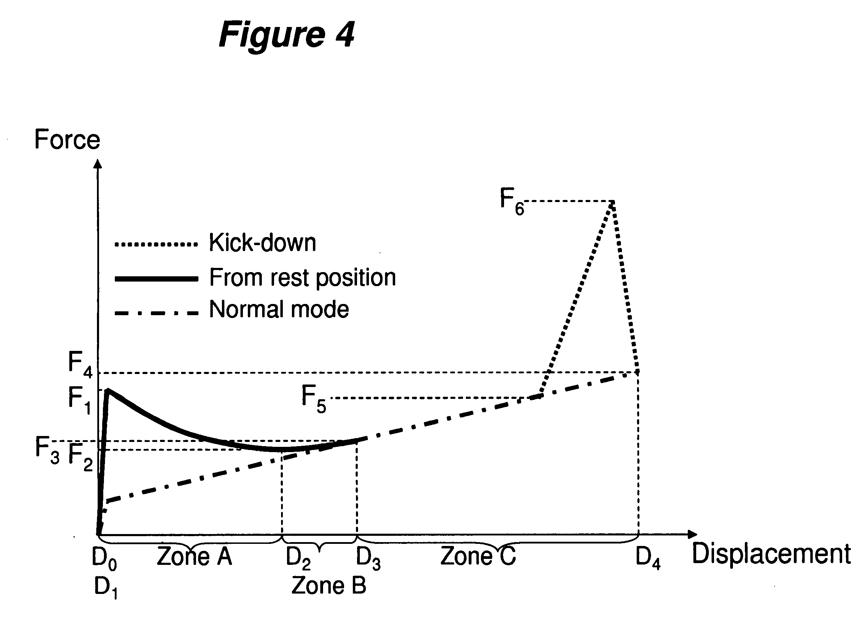

The vehicle may additionally be provided with a kick-down function as illustrated in the third embodiment of the invention in Figure 4. The kick-down function is achieved by pressing the pedal with a force exceeding a kick-down threshold F₅ to attain kick-down in the vicinity of the end of the available full displacement D₄. Provided that the maximum engine revolutions will not be exceeded, activation of the kick-down function will cause the vehicle gearbox to engage a lower gear. When the vehicle is provided with a kick-down function, it has been found appropriate to have the first threshold value F₁ as substantially as great as the kick-down threshold F₅. Thereby, the force for activating the pedal to leave the rest position is roughly the same as the force for activating the kick-down function. The kick-down threshold F₅ may also be greater than the first threshold value F₁. The kick-down curve further has a maximal force F₆, which normally exceeds both the first threshold value F₁ and the full force F₄.

Returning to Figure 1, the output torque of the electrical motor 18 provides the resistance force the driver experiences when depressing the pedal 12. By controlling the output torque as a function of displacement, e.g. by means of a control system, the pedal characteristic may be selected as desired, e.g. adapted to an individual vehicle, to an individual driver and/or to driving conditions. Purely as an example, the first threshold value F₁ may be selected dependent on the weight of the driver's foot, such that a person having a large foot can use a higher threshold than a person with a small foot. In a similar way, the other variables D₀, D₁, F₂, D₂, F₃, D₃, F₄, D₄ and optionally F₅, D₅, F₆ may also be selected, thereby determining the shape of the pedal characteristic curve.

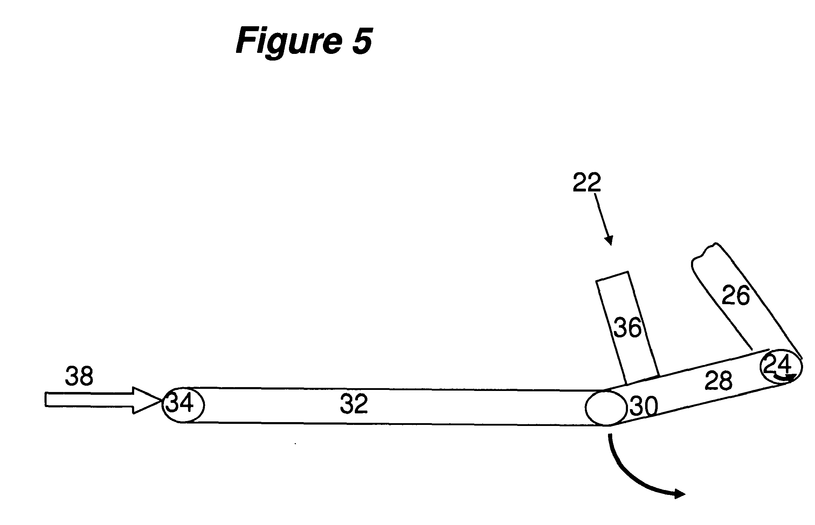

Figure 5 schematically illustrates a pedal device 10 of a vehicle according to a fourth embodiment of the invention. The restriction means is constituted by a spring arrangement 22. The spring arrangement 22 comprises a main body 24, a first leg 26, a second leg 28 and a link 32. The spring arrangement 22 is connectable to a structural part of the vehicle (not illustrated), e.g. by means of its first leg 26. At its end 30 opposite the main body 24 the second leg 28 is pivotally connected to the link 32. The link 32 is pivotally connected to the pedal lever 16 by means of a releasable connection 34, which may form a pivot point. The spring arrangement 22 may comprise a torsional spring. The pedal device 10 further comprises an abutment 36. The pedal device also comprises a pedal and a pedal housing, which however are similar to those in Figure 1 and therefore not illustrated.

The releasable connection 34 is disconnected or inactive when running the vehicle in the normal mode. However, when the driver selects the vehicle to run in the cruise control mode, the releasable connection 34 is connected and becomes active, thereby being able to hold the pedal in the rest position.

The spring arrangement 22 is pre-tensioned. The size of the pre-tensional force depends on the arrangement of the levers in the pedal device, for example the length of the levers, but the pre-tensional force is adapted to provide the above-mentioned first threshold value F₁ to the pedal. The abutment 36 provides a physical stop for the movement of the second leg 32 corresponding to the rest position D₀ of the pedal device and prevents the second leg 28 from moving further upwards. The abutment 36 is arranged to take up the forces of the pre-tensioned spring arrangement 22. When a foot is placed on the pedal, the weight of the foot is counteracted by the pre-tensional force of the spring arrangement 22, such that the pre-tensional force at least partly is used to support the foot.

When the driver depresses the pedal with a depressing force, the depressing force is transferred as a transfer force 38 via the link 32 to the spring arrangement 22. If the depressing force is greater than the first threshold value F₁, the second leg 28 moves away from the abutment 36. Thereafter, no more force is taken up by the abutment 36. The force required during the further displacement of the pedal is determined by the spring characteristic of the spring arrangement 22 and the arrangement of the levers of the spring arrangement 22. By selecting a spring arrangement which is degressive for at least a part of its spring characteristic curve, the desired pedal characteristic according to the invention may be obtained. The arrows of Figure 5 indicate the movement direction of the individual parts of the pedal device when the depressing force is greater than the first threshold value F₁.

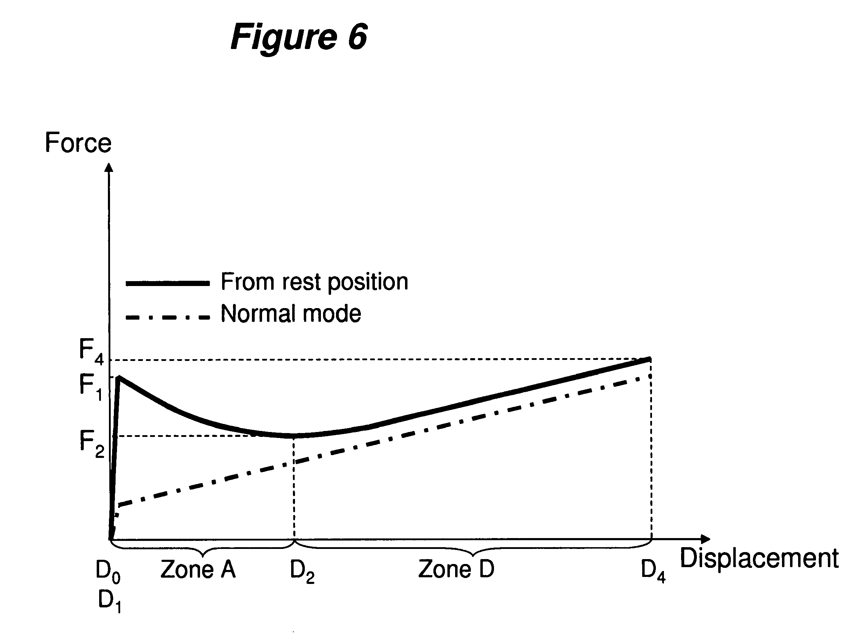

Figure 6 shows the pedal characteristic of a pedal device according to the fourth embodiment. The properties of D₀, D₁, D₂, F₁ and F₂ are similar to those already described for Figure 2. D₀ and D₁ coincide in this exemplary embodiment. The solid line, being the pedal characteristics going from the rest position of the cruise control, never reaches the dashed line, being the pedal characteristic of the normal mode, but instead continues above the dashed line in zone D until full displacement D₄ is reached.

Even if Figures 2, 3, 4 and 6 show pedal characteristics of a gas pedal, the pedal device according to the invention may also be used for a brake pedal.

The pedal device according to the invention may be used in conventionally driven vehicles, electrical vehicles or hybrids. In the case of an electrical vehicle, the pedal 12 is commonly called an accelerator pedal.

Further modifications of the invention within the scope of the appended claims are feasible. As such, the present invention should not be considered as limited by the embodiments and figures described herein. Rather, the full scope of the invention should be determined by the appended claims.

## Claims

1. A pedal device (10) for a vehicle comprising
- a pedal (12) adapted to be depressed by a driver by means of a force, and
- a restriction means (18) adapted to restrict the displacement of said pedal (12) in the depression direction,
when said vehicle is in a cruise control mode, said restriction means (18) being adapted to retain said pedal (12) in a rest position when said pedal (12) is subjected to a force less than or equal to a predetermined first threshold value (F₁), and said restriction means (18) being adapted to allow depressing of said pedal (12) away from said rest position when said pedal (12) is subjected to a force greater than said first threshold value (F₁),
**characterized in that**
said pedal device (10) is arranged such that after having exceeded said first threshold value (F₁), said force required to depress said pedal (12) reduces gradually as a function of further displacement for at least a part of the further displacement.

2. The pedal device (10) according to claim 1, wherein a graph of said force versus said displacement has a gradient having a maximum magnitude, which during said at least a part of the further displacement is between 0.5 and 4 N/mm, preferably between 1 and 2 N/mm and most preferably between 1.3 and 1.7 N/mm.

3. The pedal device (10) according to claim 1 or 2, wherein said first threshold value (F₁) is between 10 and 60 N, preferably between 20 and 50 N, and most preferably between 30 and 40 N.

4. The pedal device (10) according to any one of the preceding claims, wherein said first threshold value (F₁) is between 60% and 130% of the full force (F₄), preferably between 80% and 110% and most preferably between 90% and 100%.

5. The pedal device (10) according to any one of the preceding claims, wherein, for pedal displacements smaller than a predetermined displacement threshold (D₃), the force needed to depress said pedal (12) further is higher when going from said rest position of said vehicle than going from a corresponding pedal position during a normal mode of operation of said vehicle.

6. The pedal device (10) according to any one of the preceding claims, wherein for pedal displacements larger than a predetermined displacement threshold (D₃), the force required to depress said pedal (12) further is substantially the same going from said rest position as going from a corresponding pedal position during the normal mode of operation of said vehicle.

7. The pedal device (10) according to claim 5 or 6, wherein said displacement threshold (D₃) is located at a displacement being between 10% and 80% of the full displacement (D₄), preferably between 20% and 70% of the full displacement (D₄), and most preferably between 30% and 60% of the full displacement (D₄).

8. The pedal device (10) according to any one of claims 5-7, wherein after having exceeded said first threshold value (F₁), said force required to depress said pedal (12) is reduced gradually as a function of further displacement until a displacement (D₂) is reached corresponding to a minimum force (F₂), said displacement (D₂) corresponding to said minimum force (F₂) being less than said displacement threshold (D₃).

9. The pedal device (10) according to any one of the preceding claims, wherein said pedal device (10) forms a gas pedal of said vehicle.

10. The pedal device (10) according to claim 9, wherein said pedal device (10) further has a kick-down function, achievable by depressing said pedal (12) with a force exceeding a kick-down threshold (F₅) to attain kick-down, said kick-down threshold (F₅) being substantially as great as said first threshold (F₁) or greater than said first threshold (F₁).

11. The pedal device (10) according to any one of the preceding claims, wherein said restriction means (18) is comprised in a pedal housing (14) forming part of said pedal device (10), said pedal (12) being connected to said pedal housing (14) by means of a pedal lever (16).

12. The pedal device (10) according to any one of the preceding claims, wherein said restriction means (18) comprises an electrical motor, the output torque of which is utilized to control the displacement of said pedal (12).

13. The pedal device (10) according to claim 12, wherein said electrical motor is arranged to provide a selectable output torque.

14. The pedal device (10) according to any one of the preceding claims, wherein said restriction means comprises a degressive spring arrangement (22).

15. The pedal device (10) according to claim 14, wherein said spring arrangement (22) is pre-tensioned in order to provide said first threshold value (F₁).

## Patentansprüche

1. Pedalvorrichtung (10) für ein Fahrzeug, die Folgendes umfasst:
- ein Pedal (12), das ausgelegt ist, um durch einen Fahrer mittels einer Kraft niedergedrückt zu werden, und
- Begrenzungsmittel (18), die ausgelegt sind, um die Verlagerung des Pedals (12) in Richtung des Niederdrückens zu begrenzen,
wobei dann, wenn sich das Fahrzeug in einem Fahrgeschwindigkeitsregelungs-Betriebszustand befindet, die Begrenzungsmittel (18) ausgelegt sind, um das Pedal (12) in einer Ruheposition zu halten, wenn das Pedal (12) einer Kraft ausgesetzt ist, die kleiner oder gleich einem vorgegebenen ersten Schwellenwert (F₁) ist, und die Begrenzungsmittel (18) ausgelegt sind, um das Niederdrücken des Pedals (12) weg von der Ruheposition zu ermöglichen, wenn das Pedal (12) einer Kraft ausgesetzt ist, die größer ist als der erste Schwellenwert (F₁),
**dadurch gekennzeichnet, dass**
die Pedalvorrichtung (10) so ausgelegt ist, dass sich, nachdem der erste Schwellenwert (F₁) überschritten wurde, die Kraft, die erforderlich ist, um das Pedal (12) niederzudrücken, als eine Funktion der weiteren Verlagerung für wenigstens einen Teil der weiteren Verlagerung allmählich verringert.

2. Pedalvorrichtung (10) nach Anspruch 1, wobei eine graphische Darstellung der Kraft gegen die Verlagerung einen Gradienten aufweist, der eine maximale Größe aufweist, die wenigstens während des Teils der weiteren Verlagerung im Bereich von 0,5 bis 4 N/mm, vorzugsweise im Bereich von 1 bis 2 N/mm und am meisten bevorzugt im Bereich von 1,3 bis 1,7 N/mm liegt.

3. Pedalvorrichtung (10) nach Anspruch 1 oder 2, wobei der erste Schwellenwert (F₁) im Bereich von 10 bis 60 N, vorzugsweise im Bereich von 20 bis 50 N und am meisten bevorzugt im Bereich von 30 bis 40 N liegt.

4. Pedalvorrichtung (10) nach einem der vorhergehenden Ansprüche, wobei der erste Schwellenwert (F₁) im Bereich von 60 % bis 130 %, vorzugsweise im Bereich von 80 % bis 110 % und am meisten bevorzugt im Bereich von 90 % bis 100 % der vollen Kraft (F₄) liegt.

5. Pedalvorrichtung (10) nach einem der vorhergehenden Ansprüche, wobei für Pedalverlagerungen, die kleiner sind als ein vorgegebener Verlagerungsschwellenwert (D₃), die Kraft, die benötigt wird, um das Pedal (12) weiter niederzudrücken, größer ist, wenn sie von der Ruheposition des Fahrzeugs ausgeht, als wenn sie von einer entsprechenden Pedalposition während eines normalen Betriebszustands des Fahrzeugs ausgeht.

6. Pedalvorrichtung (10) nach einem der vorhergehenden Ansprüche, wobei für Pedalverlagerungen, die größer sind als ein vorgegebener Verlagerungsschwellenwert (D₃), die Kraft, die benötigt wird, um das Pedal (12) weiter niederzudrücken, im Wesentlichen die gleiche ist, wenn sie von der Ruheposition des Fahrzeugs ausgeht, wie wenn sie von einer entsprechenden Pedalposition während eines normalen Betriebszustands des Fahrzeugs ausgeht.

7. Pedalvorrichtung (10) nach Anspruch 5 oder 6, wobei sich der Verlagerungsschwellenwert (D₃) bei einer Verlagerung im Bereich von 10 % bis 80 % der vollständigen Verlagerung (D₄), vorzugsweise im Bereich von 20 % bis 70 % der vollständigen Verlagerung (D₄) und am meisten bevorzugt im Bereich von 30 % bis 60 % der vollständigen Verlagerung (D₄) befindet.

8. Pedalvorrichtung (10) nach einem der Ansprüche 5-7, wobei, nachdem der erste Schwellenwert (F₁) überschritten wurde, die Kraft, die erforderlich ist, um das Pedal (12) niederzudrücken, als eine Funktion der weiteren Verlagerung allmählich verringert wird, bis eine Verlagerung (D₂) erreicht ist, die einer Minimalkraft (F₂) entspricht, wobei die Verlagerung (D₂), die der Minimalkraft (F₂) entspricht, kleiner ist als der Verlagerungsschwellenwert (D₃).

9. Pedalvorrichtung (10) nach einem der vorhergehenden Ansprüche, wobei die Pedalvorrichtung (10) ein Fahrpedal des Fahrzeugs bildet.

10. Pedalvorrichtung (10) nach Anspruch 9, wobei die Pedalvorrichtung (10) ferner eine Kickdown-Funktion aufweist, die durch Niederdrücken des Pedals (12) mit einer Kraft erhalten werden kann, die einen Kickdown-Schwellenwert (F₅) übersteigt, um einen Kickdown zu erreichen, wobei der Kickdown-Schwellenwert (F₅) im Wesentlichen so groß ist wie der erste Schwellenwert (F₁) oder größer ist als erste Schwellenwert (F₁).

11. Pedalvorrichtung (10) nach einem der vorhergehenden Ansprüche, wobei die Begrenzungsmittel (18) in einem Pedalgehäuse (14) enthalten sind, das einen Abschnitt der Pedalvorrichtung (10) bildet, wobei das Pedal (12) mit dem Pedalgehäuse (14) mittels eines Pedalhebels (16) verbunden ist.

12. Pedalvorrichtung (10) nach einem der vorhergehenden Ansprüche, wobei die Begrenzungsmittel (18) einen Elektromotor umfassen, dessen Antriebsmoment verwendet wird, um die Verlagerung des Pedals (12) zu steuern.

13. Pedalvorrichtung (10) nach Anspruch 12, wobei der Elektromotor ausgelegt ist, um ein wählbares Antriebsmoment zur Verfügung zu stellen.

14. Pedalvorrichtung (10) nach einem der vorhergehenden Ansprüche, wobei die Begrenzungsmittel eine degressive Federanordnung (22) umfassen.

15. Pedalvorrichtung (10) nach Anspruch 14, wobei die Federanordnung (22) vorgespannt ist, um den ersten Schwellenwert (F₁) zur Verfügung zu stellen.

## Revendications

1. Dispositif à pédale (10) pour un véhicule, comprenant :
- une pédale (12) adaptée pour être enfoncée par un conducteur au moyen d'une force, et
- un moyen de restriction (18) adapté pour restreindre le déplacement de ladite pédale (12) dans la direction d'enfoncement,
lorsque ledit véhicule est dans un mode de régulation de vitesse automatique, ledit moyen de restriction (18) étant adapté de façon à retenir ladite pédale (12) dans une position de repos lorsque ladite pédale (12) est soumise à une force inférieure ou égale à une première valeur seuil prédéterminée (F₁), et ledit moyen de restriction (18) étant adapté de façon à permettre l'enfoncement de ladite pédale (12) en l'écartant de ladite position de repos lorsque ladite pédale (12) est soumise à une force supérieure à ladite première valeur seuil (F₁),
**caractérisé en ce que**
ledit dispositif à pédale (10) est agencé de façon à ce que, après avoir dépassé ladite première valeur seuil (F₁), ladite force requise pour enfoncer ladite pédale (12) diminue progressivement en fonction du déplacement supplémentaire pendant au moins une partie du déplacement supplémentaire.

2. Dispositif à pédale (10) selon la revendication 1, dans lequel un graphique de ladite force en fonction dudit déplacement a un gradient ayant une grandeur maximum, qui, pendant ladite au moins une partie du déplacement supplémentaire est située entre 0,5 et 4 N/mm, de préférence entre 1 et 2 N/mm et, de toute préférence, entre 1,3 et 1,7 N/mm.

3. Dispositif à pédale (10) selon la revendication 1 ou 2, dans lequel ladite première valeur seuil (F₁) est située entre 10 et 60 N, de préférence entre 20 et 50 N, et de toute préférence entre 30 et 40 N.

4. Dispositif à pédale (10) selon l'une quelconque des revendications précédentes, dans lequel ladite première valeur seuil (F₁) est située entre 60 % et 130 % de la pleine force (F₄), de préférence entre 80 % et 110 % et de toute préférence entre 90 % et 100 %.

5. Dispositif à pédale (10) selon l'une quelconque des revendications précédentes, dans lequel, pour des déplacements de pédale plus petits qu'un seuil de déplacement prédéterminé (D₃), la force nécessaire pour enfoncer ladite pédale (12) plus avant est plus haute lorsqu'on part de ladite position de repos dudit véhicule que lorsqu'on part d'une position de pédale correspondante pendant un mode de marche normal dudit véhicule.

6. Dispositif à pédale (10) selon l'une quelconque des revendications précédentes, dans lequel, pour des déplacements de pédale plus grands qu'un seuil de déplacement prédéterminé (D₃), la force nécessaire pour enfoncer ladite pédale (12) plus avant est essentiellement la même lorsqu'on part de ladite position de repos que lorsqu'on part d'une position de pédale correspondante pendant le mode de marche normal dudit véhicule.

7. Dispositif à pédale (10) selon la revendication 5 ou 6, dans lequel ledit seuil de déplacement (D₃) est situé à un déplacement étant entre 10 % et 80 % du déplacement complet (D₄), de préférence entre 20 % et 70 % du déplacement complet (D₄), et de toute préférence entre 30 % et 60 % du déplacement complet (D₄).

8. Dispositif à pédale (10) selon l'une quelconque des revendications 5 à 7, dans lequel, après avoir dépassé ladite première valeur seuil (F₁) , ladite force requise pour enfoncer ladite pédale (12) est réduite progressivement en fonction du déplacement supplémentaire jusqu'à ce qu'un déplacement (D₂) soit atteint, correspondant à une force minimum (F₂), ledit déplacement (D₂) correspondant à ladite force minimum (F₂) étant plus petit que ledit seuil de déplacement (D₃).

9. Dispositif à pédale (10) selon l'une quelconque des revendications précédentes, ledit dispositif à pédale (10) formant une pédale d'accélération dudit véhicule.

10. Dispositif à pédale (10) selon la revendication 9, ledit dispositif à pédale (10) ayant en outre une fonction de rétrogradation forcée, pouvant être obtenue en enfonçant ladite pédale (12) avec une force dépassant un seuil de rétrogradation forcée (F₅) pour atteindre une rétrogradation forcée, ledit seuil de rétrogradation forcée (F₅) étant essentiellement aussi grand que ledit premier seuil (F₁) ou plus grand que ledit premier seuil (F₁).

11. Dispositif à pédale (10) selon l'une quelconque des revendications précédentes, dans lequel ledit moyen de restriction (18) est compris dans un boîtier de pédale (14) faisant partie dudit dispositif à pédale (10), ladite pédale (12) étant rattachée audit boîtier de pédale (14) au moyen d'un levier de pédale (16).

12. Dispositif à pédale (10) selon l'une quelconque des revendications précédentes, dans lequel ledit moyen de restriction (18) comprend un moteur électrique, dont le couple de sortie est utilisé pour commander le déplacement de ladite pédale (12).

13. Dispositif à pédale (10) selon la revendication 12, dans lequel ledit moteur électrique est agencé de façon à fournir un couple de sortie pouvant être sélectionné.

14. Dispositif à pédale (10) selon l'une quelconque des revendications précédentes, dans lequel ledit moyen de restriction comprend un agencement à ressort dégressif (22).

15. Dispositif à pédale (10) selon la revendication 14, dans lequel ledit agencement à ressort (22) est pré-tendu pour fournir ladite première valeur seuil (F₁)
